# EUROPÄISCHE PATENTANMELDUNG

(11) **EP 3 981 286 A1**
(43) Veröffentlichungstag der Anmeldung: **13.04.2022**
(21) Anmeldenummer: 21197109.8
(22) Anmeldetag: 16.09.2021
(51) Int. Cl.: A45F 4/10, B62B 13/16

(54) **SCHLITTENRUCKSACK**

(30) Priorität: 08.10.2020 AT 508712020
(71) Anmelder: Schwinger, Robert, 8755 St. Peter ob Judenburg (AT)
(72) Erfinder: Schwinger, Robert, 8755 St. Peter ob Judenburg (AT)
(74) Vertreter: Wirnsberger & Lerchbaum Patentanwälte OG

(57) **Zusammenfassung**

Die Erfindung betrifft ein Set, umfassend einen Rucksack und einen Schlitten. Um einen einfachen Wechsel von einer gehenden Fortbewegung auf eine fahrende Fortbewegung zu ermöglichen, ist erfindungsgemäß vorgesehen, dass der Schlitten bewegbar, insbesondere lösbar, mit dem Rucksack verbindbar ist, wobei der Schlitten am Rucksack in einer Transportposition anbringbar ist, in welcher der Schlitten mit dem Rucksack an einem Rücken einer Person transportierbar ist, wobei der Schlitten von der Transportposition mittels einer Bewegung relativ zum Rucksack in eine Fahrposition bringbar ist, in welcher eine den Rucksack tragende Person auf einer Sitzfläche des Schlittens sitzen oder liegen kann.

## Beschreibung

Die Erfindung betrifft ein Set, umfassend einen Rucksack und einen Schlitten.

Weiter betrifft die Erfindung einen Schlitten für ein solches Set, aufweisend eine Sitzfläche sowie zwei mit der Sitzfläche über seitliche Verbindungselemente verbundene Kufen.

Darüber hinaus betrifft die Erfindung einen Rucksack für ein solches Set, wobei der Rucksack einen Boden, zwei Seitenflächen, eine Vorderseite und eine Rückseite aufweist, wobei an der Rückseite Trageriemen angeordnet sind, über welche der Rucksack an einem Rücken einer Person anbringbar ist.

Aus dem Stand der Technik sind Rucksäcke und Schlitten unabhängig voneinander hinlänglich bekannt geworden. Darüber hinaus sind beispielsweise aus den Dokumenten AT 76461, CH 276583 A und DE 198 05 505 A1 auch Schlitten bekannt geworden, welche wie ein Rucksack über entsprechende Schlaufen an einem Rücken an einer Person befestigbar sind, sodass die Schlitten wie Rucksäcke getragen werden können.

Insbesondere bei Schneeschuhwanderungen hat es sich gezeigt, dass ein mitgeführter Schlitten von großem Vorteil sein kann. So können dann Passagen des Wanderweges, die beispielsweise bei schneebedecktem Untergrund leicht abfallend verlaufen, mit einem Schlitten schnell und kräfteschonend zurückgelegt werden, sodass die Schneeschuhe nur für ansteigende Passagen eingesetzt werden müssen. Hierzu sind jedoch die aus dem Stand der Technik bekannten Schlitten, die an einem Rücken getragen werden können, ungeeignet, zumal diese nur mit großem Aufwand von einer Transportposition am Rücken in eine Fahrposition bringbar sind, sodass ein Wechsel einer Fortbewegungsart vom klassischen Gehen auf ein Fahren mittels des mitgeführten Schlittens nur für längere Passagen zweckmäßig ist.

Hier setzt die Erfindung an. Aufgabe der Erfindung ist es, ein Set der eingangs genannten Art anzugeben, bei welchem der Schlitten bei Bedarf auf besonders einfache und schnelle Weise von einer Trageposition am Rücken in eine Fahrposition bringbar ist, um beispielsweise auch nur für kurze Strecken auf den Schlitten wechseln zu können.

Weiter sollen ein Schlitten und ein Rucksack für ein derartiges Set angegeben werden.

Die erste Aufgabe wird erfindungsgemäß durch ein Set der eingangs genannten Art gelöst, wobei der Schlitten bewegbar, insbesondere lösbar, mit dem Rucksack verbindbar ist, wobei der Schlitten am Rucksack in einer Transportposition anbringbar ist, in welcher der Schlitten mit dem Rucksack an einem Rücken einer Person transportierbar ist, wobei der Schlitten von der Transportposition mittels einer Bewegung relativ zum Rucksack in eine Fahrposition bringbar ist, in welcher eine den Rucksack tragende Person auf einer Sitzfläche des Schlittens sitzen oder liegen kann.

Im Rahmen der Erfindung wurde erkannt, dass ein besonders schneller und gleichzeitig einfacher Wechsel von einer Trageposition, in welcher die Person den Schlitten samt Rucksack trägt, in eine Fahrposition, in welcher die Person auf dem Schlitten sitzen oder liegen kann, ermöglicht ist, wenn der Schlitten nicht starr mit dem Rucksack verbunden ist, sondern der Schlitten bewegbar und vorzugsweise lösbar mit dem Rucksack verbunden ist, sodass der Schlitten vom Rücken der Person abgenommen und zwischen den Beinen einer der Person positioniert werden kann, ohne den Rucksack abnehmen zu müssen. Entsprechend ist eine einfache Umpositionierung des Schlittens auch von einer Fahrposition in die Transportposition ermöglicht.

Günstig ist es, wenn der Schlitten zwei Kufen aufweist und der Rucksack in der Transportposition zwischen den Kufen angeordnet ist, wobei eine Sitzfläche des Schlittens über einer Vorderseite des Rucksacks positioniert ist. Schlitten und Rucksack sind somit üblicherweise derart aufeinander abgestimmt, dass unter einer Sitzfläche des Schlittens und zwischen Kufen des Schlittens, welche üblicherweise über seitliche Verbindungselemente mit der Sitzfläche verbunden sind, ein Hohlraum gebildet ist, welcher den Rucksack aufnehmen kann. Eine Außenkontur des Rucksacks korrespondiert somit mit einer Kontur des Schlittens zwischen den Verbindungselementen unterhalb der Sitzfläche. Um einen entsprechenden Hohlraum bereitzustellen, weist der Schlitten üblicherweise keine Verbindungsstreben oder ähnliches zwischen den seitlichen Verbindungselementen unterhalb der Sitzfläche auf, welche häufig bei herkömmlichen Schlitten die seitlichen Verbindungselemente unterhalb der Sitzfläche mechanisch miteinander koppeln.

Es hat sich bewährt, dass der Rucksack mit dem Schlitten an zumindest einer ersten Position lösbar verbindbar ist. Die erste Position ist üblicherweise in einem oberen Bereich angeordnet, sodass eine den Rucksack tragende Person beispielsweise durch einen Griff über die Schulter oder hinter den Rücken ein Verbindungsmittel, welches den Schlitten an der ersten Position lösbar mit dem Rucksack verbindet, beispielsweise ein kraft- und/oder formschlüssiges Verbindungsmittel, lösen kann, um eine Bewegung des Schlittens relativ zum Rucksack zu ermöglichen.

Weiter ist bevorzugt vorgesehen, dass der Rucksack mit dem Schlitten an zumindest einer zweiten Position schwenkbar und/oder lösbar verbindbar ist. Die zweite Position befindet sich bevorzugt in einem unteren Bereich des Rucksacks, sodass der Schlitten bei Befestigung am Rucksack über die erste Position und die zweite Position an voneinander beabstandeten Positionen verbunden ist und sich ein stabiler Halt ergibt.

Wenn die Verbindung an der zweiten Position eine Schwenkbewegung des Schlittens relativ zum Rucksack ermöglicht, kann ein Wechsel von der Trageposition in die Fahrposition beispielsweise erfolgen, indem der Schlitten an der ersten Position vom Rucksack gelöst wird, wonach der Schlitten relativ zum Rucksack mittels des an der zweiten Position befindlichen Verbindungsmittels geschwenkt wird, sodass der Schlitten relativ zum Rucksack, beispielsweise um eine Horizontalachse und zwischen Beinen einer Person, welche den Rucksack trägt, hindurchgeschwenkt werden kann. Bevorzugt ist eine Sitzfläche des Schlittens hierzu außenseitig angeordnet, sodass der Schlitten durch eine Schwenkbewegung um die horizontale Achse um etwa 270 Grad unmittelbar in einer Position ist, in welcher die Person sich auf den Schlitten setzen kann.

Bevorzugt ist vorgesehen, dass der Schlitten mit dem Rucksack um eine Schwenkachse schwenkbar verbunden ist. Üblicherweise ist der Schlitten mit dem Rucksack an der zweiten Position schwenkbar verbunden, wobei sich die zweite Position in der Regel an einem hinteren Ende einer Sitzfläche des Rucksacks befindet, welches hintere Ende der Sitzfläche bei Positionierung des Schlittens am Rucksack üblicherweise an einem unteren Ende des Rucksacks positioniert ist. Die Schwenkachse ist üblicherweise parallel zu einer Querachse des Rucksacks und parallel zu einer Transversalachse einer gedachten Person, welche den Rucksack bestimmungsgemäß am Rücken trägt, sodass der Schlitten durch eine Schwenkbewegung um diese Schwenkachse relativ zum Rucksack im Wesentlichen von der Transportposition am Rücken in die Fahrposition gebracht werden kann, indem der Schlitten unterhalb eines Gesäßes der Person, welche den Rucksack trägt, und zwischen den Beinen der Person hindurchgeschwenkt wird. Dies ermöglicht einen besonders einfachen und raschen Wechsel von der Transportposition in die Fahrposition. Der Schlitten kann, muss jedoch nicht zwingend, vom Rucksack gelöst werden, um eine einfache Bewegbarkeit der den Schlitten benutzenden Person auf dem Schlitten zu ermöglichen.

Um auf einfache Weise sicherzustellen, dass der Schlitten nicht verloren werden kann, kann der Schlitten mit dem Rucksack über eine Sicherungsleine verbunden sein. Sollte die den Schlitten benutzende Person, welche den Rucksack am Rücken trägt, somit während des Fahrens vom Schlitten fallen, kann der Schlitten nicht ungehindert beispielsweise einen Berg hinabfahren, sondern ist durch die Sicherungsleine weiterhin mit der Person verbunden.

Ein besonders einfacher Wechsel von der Transportposition in die Fahrposition und zurück ergibt sich, wenn der Schlitten von der Transportposition in die Fahrposition bringbar ist, indem der Schlitten vom Rucksack an einer ersten Position gelöst wird, wonach der Schlitten um eine Schwenkachse, welche vorzugsweise parallel zu einer Transversalachse einer gedachten Person, welche den Rucksack trägt, ist, unter dem Rucksack hindurchgeschwenkt wird, wobei der Schlitten während des Schwenkens noch an einer zweiten Position mit dem Rucksack verbunden ist, wonach der Schlitten vom Rucksack gänzlich gelöst wird. Dabei kann auch vorgesehen sein, dass die Schwenkachse selbst klappbar mit einem Boden des Rucksacks verbunden ist, beispielsweise über eine Aufnahme des Rucksacks, welche den Schlitten lösbar und schwenkbar mit dem Rucksack verbindet, welche Aufnahme selbst wiederum bewegbar mit dem Boden des Rucksacks verbunden ist.

Wie ausgeführt eignet sich ein entsprechendes Set besonders zur Durchführung von Sportarten, beispielsweise zum Schneeschuhwandern. Bevorzugt ist daher vorgesehen, dass am Rucksack und/oder am Schlitten weitere Sportgeräte anbringbar sind. Besonders günstig hat es sich in diesem Zusammenhang herausgestellt, wenn beim Set zwei Schneeschuhe vorgesehen sind, wobei der Schlitten zur lösbaren Befestigung der Schneeschuhe, insbesondere an seitlichen Verbindungselementen des Schlittens, ausgebildet ist. Der Schlitten kann dabei beispielsweise auch derart ausgebildet sein, dass der Schlitten mittels der Kufen auf einem schneebedeckten Untergrund bewegbar ist, wenn die Schneeschuhe am Schlitten angeordnet sind, sodass die Schneeschuhe die Kufen nicht überragen. Bei einem Wechsel von der Transportposition in die Fahrposition werden somit die Schneeschuhe auf einfache Weise am Schlitten befestigt, beispielsweise mittels form- und/oder kraftschlüssiger Befestigungsmittel wie einem Clip oder einem Klettverschluss.

Die zweite Aufgabe wird erfindungsgemäß durch einen Schlitten der eingangs genannten Art gelöst, bei welchem unter der Sitzfläche zwischen den Verbindungselementen ein Rucksack anbringbar ist. Dadurch kann der Schlitten auf einfache Weise über den Rucksack gestülpt und am Rucksack befestigt werden, sodass der Schlitten in der Trageposition platzsparend getragen werden kann.

Bevorzugt ist vorgesehen, dass die seitlichen Verbindungselemente durch umlaufende Rohre, insbesondere Aluminiumrohre, gebildet sind. Dadurch ist einerseits ein geringes Gewicht gewährleistet. Andererseits ist durch den rohrförmigen Querschnitt auch eine hohe Stabilität gegeben und kann in einem Inneren der umlaufenden Rohre auch ein weiterer Gegenstand angeordnet werden, beispielsweise jeweils ein Schneeschuh, um diesen lösbar mit dem Schlitten zu verbinden. Die Rohre weisen bevorzugt einen kreisrunden oder ovalen Querschnitt auf, wenngleich grundsätzlich auch Rohre mit einem anderen Querschnitt, insbesondere Vierkantrohre, möglich sind.

Üblicherweise werden die seitlichen Verbindungselemente durch gebogene Rohre gebildet, welche endseitig verschweißt sind. Dadurch wird eine hohe Stabilität bei geringem Gewicht gewährleistet.

Um zwischen den seitlichen Verbindungselementen und unter der Sitzfläche einen besonders großen Hohlraum zu ermöglichen, in welchem ein Rucksack angeordnet werden kann, ist bevorzugt vorgesehen, dass zwischen den seitlichen Verbindungselementen unterhalb der Sitzfläche keine weiteren Elemente angeordnet sind, insbesondere keine Verbindungsstreben oder dergleichen. Dies gewährleistet auch eine einfache und kollisionsfreie Schwenkbewegung des Schlittens relativ zum Rucksack.

Die Kufen des Schlittens können beispielsweise aus einem Metall, insbesondere einem Stahl oder Edelstahl, oder Kunststoff bestehen und lösbar und somit austauschbar mit den seitlichen Verbindungselementen verbunden sein, beispielsweise verschraubt.

Die Sitzfläche des Schlittens kann beispielsweise durch ein Textil oder dergleichen gebildet sein und insbesondere auch als Datenträgerfeld für grafische oder schriftliche Symbole genutzt werden, um beispielsweise mit dem in der Trageposition befindlichen Schlitten eine Werbebotschaft zu transportieren.

Ergänzend kann bei einem erfindungsgemäßen Set auch eine Lichtanlage vorgesehen sein, beispielsweise vorne und/oder hinten im Schlitten, insbesondere in einem Aluminiumrohr des Schlittens, wobei auch eine Akkumulator hierzu im Schlitten und/oder im Rucksack vorgesehen sein kann.

Die weitere Aufgabe wird durch einen Rucksack der eingangs genannten Art gelöst, welcher zwischen seitlichen Verbindungselementen eines Schlittens positionierbar ist. Entsprechend einem zwischen diesen Verbindungselementen und unterhalb einer Sitzfläche verfügbaren Raum ist der Rucksack daher in aller Regel ausgebildet, üblicherweise kompakt.

Eine bewegbare Verbindung des Rucksacks mit dem Schlitten in der zweiten Position kann grundsätzlich auf verschiedenste Weisen erfolgen. Beispielsweise kann der Rucksack eine Aufnahme, beispielsweise aus Kunststoff oder Metall, oder eine Federklammer für die Aufnahme eines Verbindungsrohres des Schlittens, welches die seitlichen Verbindungselemente verbindet und sich beispielsweise etwa in einer Ebene mit der Sitzfläche befinden kann, aufweisen, wobei das Verbindungsrohr relativ zur Aufnahme am Rucksack um eine Querachse, welche in der Regel parallel zu einer Transversalachse einer gedachten Person ist, welche den Rucksack trägt, rotierbar, jedoch in allen anderen Richtungen und um alle anderen Achsen starr mit der Aufnahme verbunden werden kann. Die entsprechende Aufnahme kann starr mit dem Rucksack verbunden sein.

Um eine besonders gute Bewegbarkeit des Schlittens relativ zum Rucksack zu erreichen, kann auch vorgesehen sein, dass der Rucksack einen bewegbar mit dem Boden verbundenen Adapter aufweist, wobei mit dem Adapter ein Schlitten schwenkbar und bevorzugt lösbar verbindbar ist. Diese schwenkbare Verbindung des Schlittens mit dem Rucksack über den Adapter kann beispielsweise über eine Aufnahme erfolgen, wobei der Schlitten auch von der Aufnahme gelöst werden kann. Der Adapter kann mit weiteren Bestandteilen des Rucksacks über ein Gelenk verbunden sein, welches beispielsweise durch zwei koaxiale Rohre, welche relativ zueinander rotierbar sind, gebildet sein kann.

Der Adapter ermöglicht somit auch eine Überbrückung eines Höhenunterschiedes zwischen einer Ebene eines Bodens des Rucksacks, welcher üblicherweise oberhalb eines Gesäßes einer den Rucksack tragenden Person positioniert ist und einer Zielposition der Sitzfläche des Schlittens in der Fahrposition unterhalb des Gesäßes.

Bevorzugt ist der Adapter mit dem Rucksack in einem Bereich einer Rückwand des Rucksacks schwenkbar verbunden.

Ein besonders einfacher Wechsel von der Trageposition in die Fahrposition ist möglich, wenn der Adapter um eine Klappachse schwenkbar mit dem Boden verbunden ist und der Schlitten um eine zur Klappachse etwa parallele Schwenkachse schwenkbar mit dem Adapter verbunden ist. Die Klappachse und die Schwenkachse sind in der Regel parallel zu einer Transversalachse einer gedachten Person, welche den Rucksack trägt.

Die Klappachse ist üblicherweise in einem Bereich einer Rückseite des Rucksacks positioniert. Die Schwenkachse liegt bevorzugt etwa in einer Ebene der Vorderseite des Rucksacks bzw. etwa in einer Ebene der Sitzfläche des Schlittens.

Bevorzugt ist der Adapter mit weiteren Bestandteilen des Rucksacks, insbesondere mit Trageriemen des Rucksacks, um eine zur Querachse parallele Klappachse schwenkbar verbunden und ist der Schlitten mit dem Adapter um die Schwenkachse schwenkbar verbunden, wobei die Klappachse vorzugsweise etwa an einer Rückseite des Rucksacks und die Schwenkachse etwa an einer Vorderseite des Rucksacks angeordnet sind. Üblicherweise sind die Klappachse und die Querachse in einem unteren Bereich des Rucksacks, vorzugsweise bodenseitig, angeordnet.
Darüber hinaus kann auch vorgesehen sein, dass der Adapter von weiteren Bestandteilen des Rucksacks trennbar ist. Dadurch kann der Rucksack beispielsweise für eine Benutzung im Sommer einfach zu einem grundsätzlich herkömmlichen, kompakten und leichtgewichtigen Rucksack umgebaut werden.

Bevorzugt ist vorgesehen, dass der Rucksack kopfseitig ein oder mehrere Verbindungsmittel aufweist, über welche der Rucksack lösbar mit dem Schlitten verbindbar ist, beispielsweise form- und/oder kraftschlüssig. Der Schlitten kann dann einfach vom Rucksack gelöst werden, indem zunächst das oder die kopfseitigen Verbindungsmittel gelöst werden, beispielsweise mittels eines Griffes über die Schulter oder hinter den Rücken, wonach der Schlitten relativ zum Rucksack um eine zu einer Transversalachse parallele Querachse geschwenkt wird, wobei der Schlitten zwischen Beinen der Person hindurchgeschwenkt wird, um unmittelbar in die Fahrposition geschwenkt zu werden.

Um den Rucksack auf einfache Weise in einen leichtgewichtigen Zustand für eine Benutzung im Sommer ohne Schlitten bringen zu können, ist bevorzugt vorgesehen, dass das zumindest eine Verbindungsmittel lösbar mit dem Rucksack verbunden ist, insbesondere über einen Befestigungssteg.

Weiter kann auch eine Aufnahme, über welcher der Schlitten schwenkbar mit dem Rucksack verbunden sein kann, für eine Benutzung des Rucksacks im Sommer abnehmbar sein. Wenn die Aufnahme über einen Adapter, insbesondere eine schwenkbar mit dem Boden des Rucksacks verbundene Adapterplatte, mit dem Boden des Rucksacks verbunden ist, kann auch der Adapter abnehmbar ausgebildet sein, um einen für eine Benutzung im Sommer leichtgewichtigen Rucksack zu erreichen.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
Fig. 1 bis 3 ein erfindungsgemäßes Set in unterschiedlichen Ansichten;
Fig. 4 bis 9 verschiedene Schritte bei einem Wechsel von einer Transportposition in eine Fahrposition;
Fig. 10 bis 13 Details eines erfindungsgemäßen Sets;
Fig. 14 und 15 einen Schlitten eines erfindungsgemäßen Sets in unterschiedlichen Ansichten;
Fig. 16 ein Detail eines weiteren erfindungsgemäßen Rucksacks.

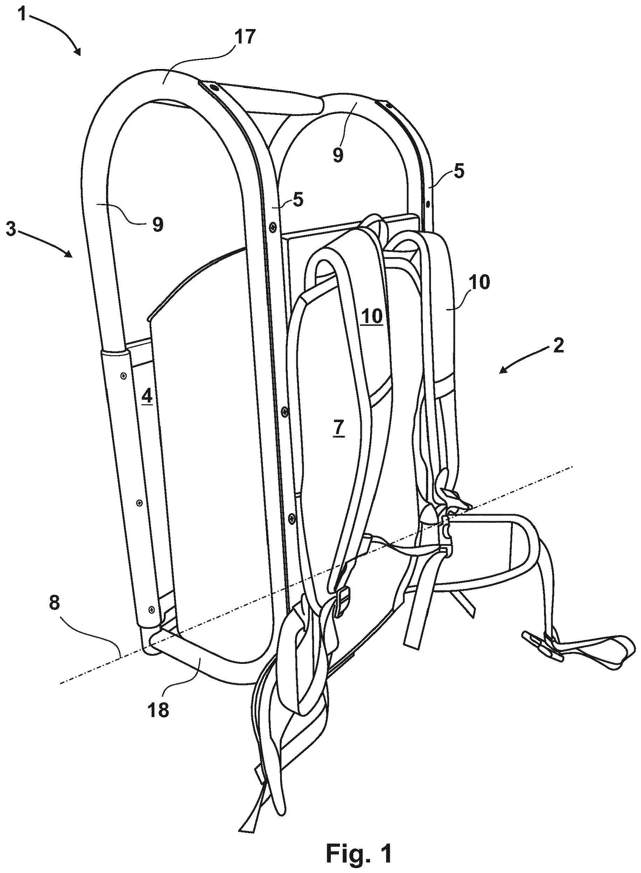

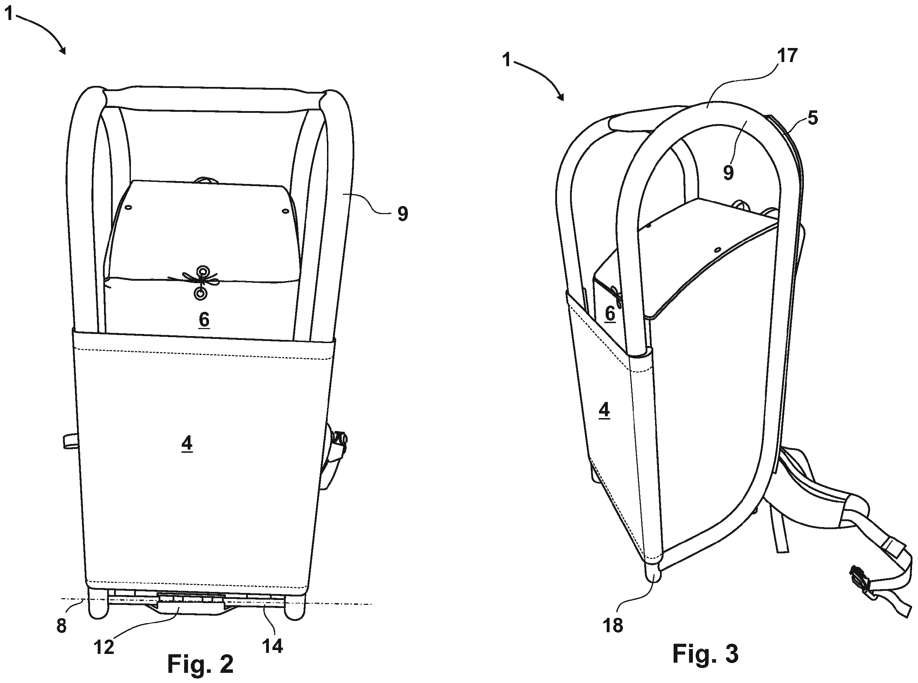

Fig. 1 bis 3 zeigen ein erfindungsgemäßes Set 1, welches einen Rucksack 2 und einen Schlitten 3 umfasst, in unterschiedlichen Ansichten, wobei sich der Schlitten 3 dabei jeweils in der Trageposition befindet, in welcher der Schlitten 3 samt dem Rucksack 2 an einem Rücken einer Person getragen werden kann. Wie ersichtlich ist der Rucksack 2 dabei derart ausgebildet, dass Kufen 5 des Schlittens 3 etwa am Rücken einer Person angeordnet sind, wenn diese Person den Rucksack 2 bestimmungsgemäß am Rücken trägt, während eine Sitzfläche 4 des Schlittens 3 an einer vom Rücken der Person abgewandten Seite des Rucksacks 2 bzw. einer Vorderseite 6 des Rucksacks 2 angeordnet ist.

Der Rucksack 2 ist somit zwischen seitlichen Verbindungselementen 9 des Schlittens 3, welche Kufen 5 des Schlittens 3 mit der Sitzfläche 4 des Schlittens 3 verbinden, und unter der Sitzfläche 4 positioniert. Entsprechend kompakt ist der Rucksack 2 ausgebildet, sodass dieser abgesehen von Trageriemen 10, mit welchen der Rucksack 2 an einer Person anbringbar ist, im Wesentlichen vollständig zwischen den seitlichen Verbindungselementen 9 und unterhalb der Sitzfläche 4 angeordnet werden kann.

Ein vorderes Ende 17 des Schlittens 3 ist dabei in der Trageposition kopfseitig bzw. an einem oberen Bereich des Rucksacks 2 oder darüber positioniert, sodass der Schlitten 3 durch einen Schwenk um eine in einem unteren Bereich des Rucksacks 2 angeordnete Schwenkachse 8, üblicherweise eine Querachse des Rucksacks 2, welche parallel zu einer Transversalachse einer gedachten, den Rucksack 2 tragenden Person ist, von der Trageposition allein durch eine Schwenkbewegung in eine Fahrposition geschwenkt werden kann, in welcher der Schlitten 3 zwischen den Beinen der Person positioniert ist, welche den Rucksack 2 trägt. Dadurch ist ein einfacher Wechsel von der Trageposition in die Fahrposition ermöglicht.

Der Rucksack 2 ist mit dem Schlitten 3 in der Trageposition an einer oberen, ersten Position 21 und einer unteren, zweiten Position 22 verbunden, wobei die Verbindungen lösbar sind und die Verbindung an der unteren, zweiten Position 22 ein Schwenken des Schlittens 3 relativ zum Rucksack 2 erlaubt.

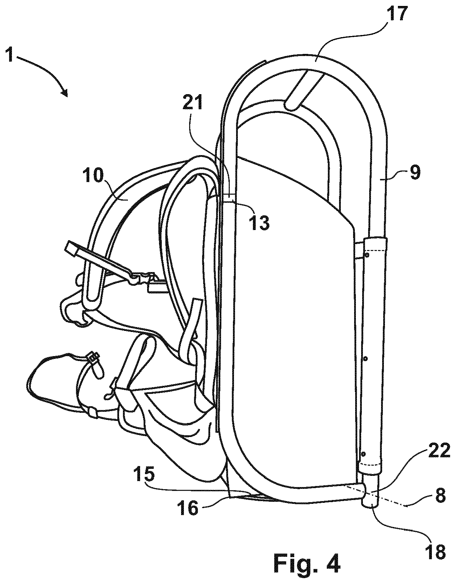

Fig. 4 bis 9 zeigen verschiedene Verfahrensschritte eines Wechsels von der Trageposition in die Fahrposition.

Fig. 4 zeigt dabei den Rucksack 2 samt Schlitten 3 noch in der Trageposition, wobei der Schlitten 3 mit dem Rucksack 2 über Verbindungsmittel 13 an einer oberen, ersten Position 21 und einer unteren, zweiten Position 22 verbunden ist. Die Verbindung an der ersten Position 21 im Bereich einer Rückseite 7 des Rucksacks 2 ist dabei lösbar und die Verbindung an der zweiten Position 22 ist lösbar und schwenkbar, und zwar mittels einer Aufnahme 12, mit welcher der Schlitten 3 um eine Schwenkachse 8 drehbar verbindbar ist, wobei die Aufnahme 12 mit Trageriemen 10 und einem Boden 15 des Rucksacks 2 um eine Klappachse 16 klappbar bewegbar ist.

Um den Rucksack 2 aus der in Fig. 4 dargestellten Trageposition in eine Fahrposition zu bringen, wird der Schlitten 3 zunächst an der ersten Position 21, welche in einem oberen Bereich des Rucksacks 2 angeordnet ist, vom Rucksack 2 gelöst.

Eine Verbindung an der ersten Position 21 erfolgt üblicherweise mittels eines kraft- und/oder formschlüssigen Verbindungsmittels 13 wie beispielsweise einer Schelle, eines Clips oder dergleichen, beispielsweise mittels einer Kunststoffklemme, mit welcher der Schlitten 3 kraftschlüssig, lösbar fixierbar ist. Üblicherweise sind beidseits des Schlittens 3 zwei entsprechende Verbindungsmittel 13 vorgesehen.

Nach Lösen des Schlittens 3 vom Rucksack 2 an der ersten Position 21 wird der Schlitten 3 relativ zum Rucksack 2 geschwenkt und ist währenddessen noch mit dem Rucksack 2 verbunden, hier im dargestellten Ausführungsbeispiel an einer zweiten Position 22 über eine Aufnahme 12, welche einerseits mit dem Schlitten 3 um eine Schwenkachse 8, welche parallel zu einer Querachse des Rucksacks 2 bzw. einer Transversalachse einer den Rucksack 2 tragenden Person ist, drehbar verbunden ist. Andererseits ist die Aufnahme 12 auch mit den Trageriemen 10 und einem Boden 15 des Rucksacks 2 schwenkbar verbunden, und zwar um eine zur Querachse parallele Klappachse 16. Die Aufnahme 12 ist hierzu mittels eines Adapters, welcher hier als Adapterplatte 11 ausgebildet ist, klappbar mit dem Boden 15 des Rucksacks 2 verbunden, sodass die Adapterplatte 11 einen zweiten, vom Rucksack 2 abklappbaren Boden 15 bildet.

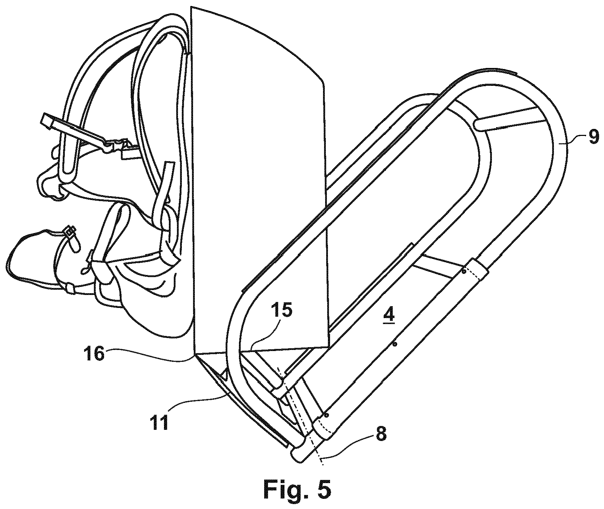

Fig. 5 zeigt einen Zustand, in welchem Schlitten 3 und Adapter um die Klappachse 16 relativ zu weiteren Teilen des Rucksacks 2 wie einem Boden 15 und den Trageriemen 10 verschwenkt sind, jedoch der Schlitten 3 noch keine Relativbewegung relativ zur Adapterplatte 11 ausgeführt hat.

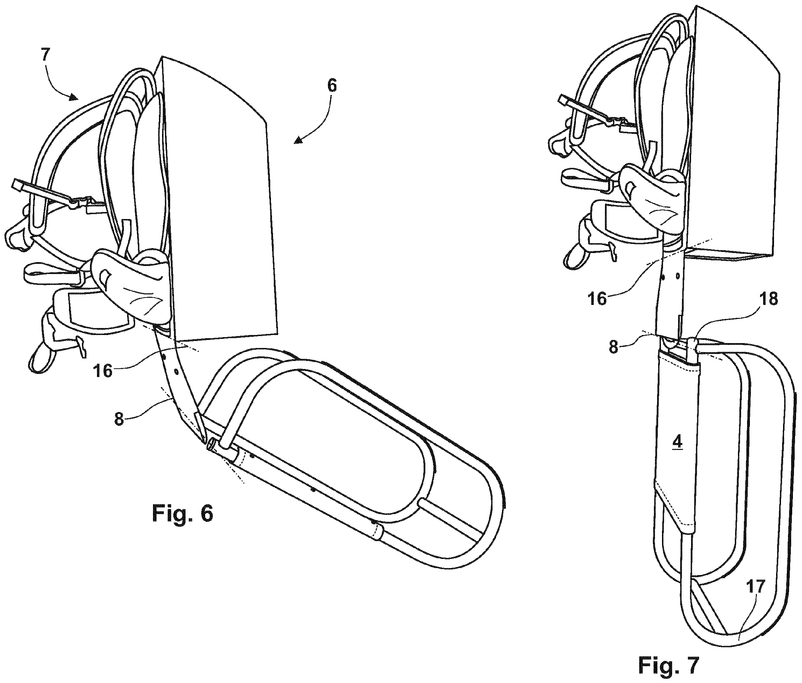

Fig. 6 zeigt einen Zustand bei weiterer Bewegung von der Trageposition in die Fahrposition. In dieser Position ist die Adapterplatte 11 noch weiter vom Boden 15 des Rucksacks 2 um die Klappachse 16 abgeschwenkt und ist nunmehr auch der Schlitten 3 relativ zur Adapterplatte 11 um die Schwenkachse 8 geschwenkt.

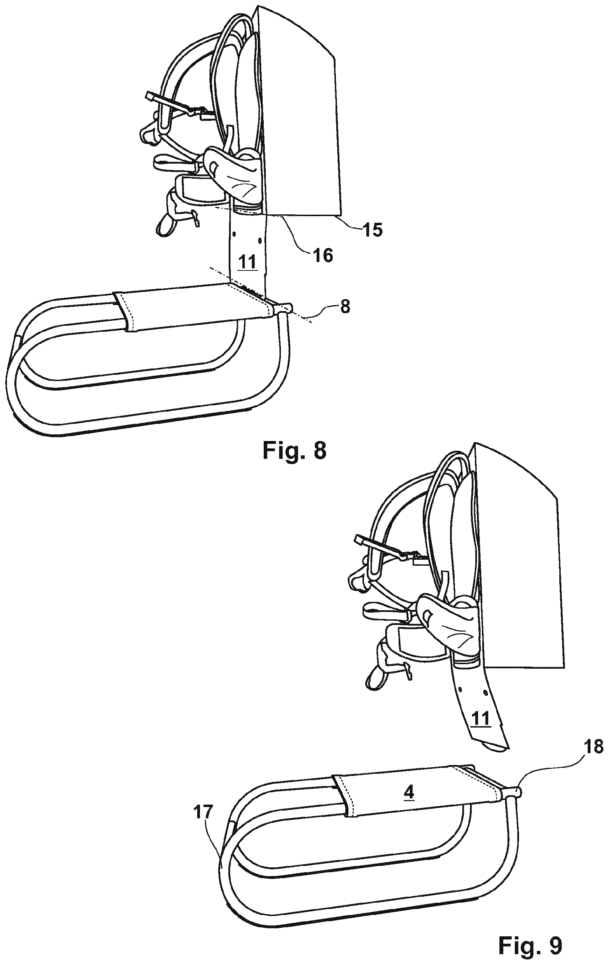

Fig. 7 und 8 zeigen Zustände bei einer weiteren Bewegung des Schlittens 3 in die Fahrposition.

Der Schlitten 3 kann von der mit dem Rucksack 2 verbundenen Adapterplatte 11 gelöst werden, was üblicherweise erfolgt, nachdem der Schlitten 3 um einen Winkel von etwa 270 Grad geschwenkt wurde und sich die Sitzfläche 4 des Schlittens 3, welche sich zu Beginn der Bewegung in einer etwa vertikalen Position befindet, etwa in einer horizontalen Position befindet. Ein entsprechender Zustand ist in Fig. 9 dargestellt.

Um den Schlitten 3 von der Fahrposition wieder in die Transportposition zu bringen, wird in entsprechend umgekehrter Reihenfolge vorgegangen. Der Schlitten 3 wird somit zunächst mit der an der schwenkbaren Adapterplatte 11 angeordneten Aufnahme 12 verbunden, wonach der Schlitten 3 zurück auf den Rucksack 2 geschwenkt wird, wonach der Schlitten 3 auch an der ersten Position 21 wieder mit entsprechenden Verbindungselementen 9 mit dem Rucksack 2 verbunden wird. Somit ist es weder für einen Wechsel von der Trageposition in die Fahrposition noch für einen Wechsel von der in Fig. 9 dargestellten Fahrposition in die in Fig. 4 dargestellte Trageposition erforderlich, den Rucksack 2 vom Rücken zu nehmen.

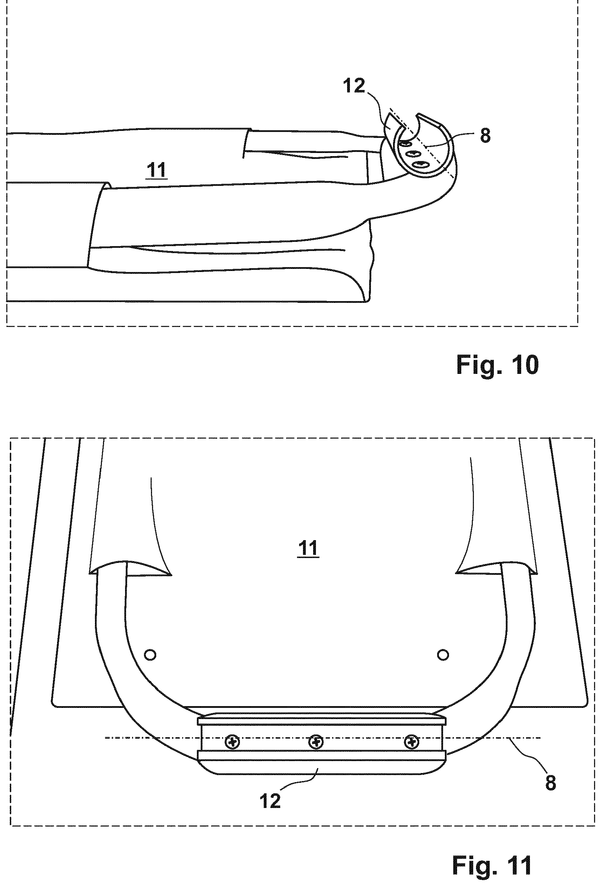

Fig. 10 und Fig. 11 zeigen ein mögliches Ausführungsbeispiel einer Aufnahme 12 an der Adapterplatte 11. Wie ersichtlich weist die Aufnahme 12 eine mit einem Verbindungsrohr 14 des Schlittens 3 korrespondierende Form auf, hier etwa eine längsseitig offene Zylinderform, sodass das Verbindungsrohr 14 koaxial in der Aufnahme 12 um die Schwenkachse 8 drehbar positioniert werden kann.

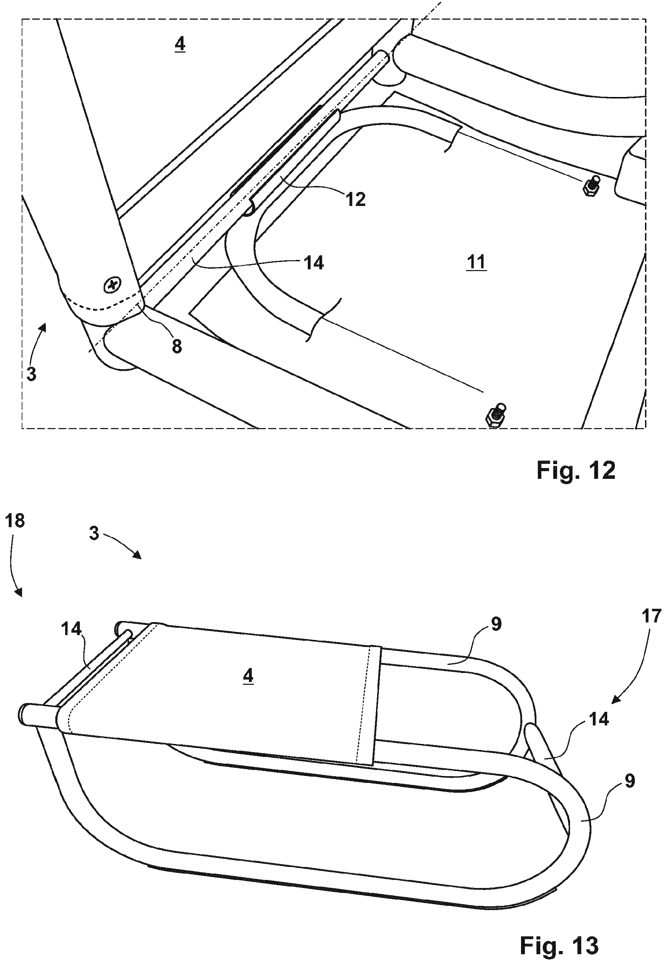

Fig. 12 zeigt die Aufnahme 12 samt dem in der Aufnahme 12 über das Verbindungsrohr 14 um die Schwenkachse 8 drehbar gelagerten Schlitten 3 im Detail.

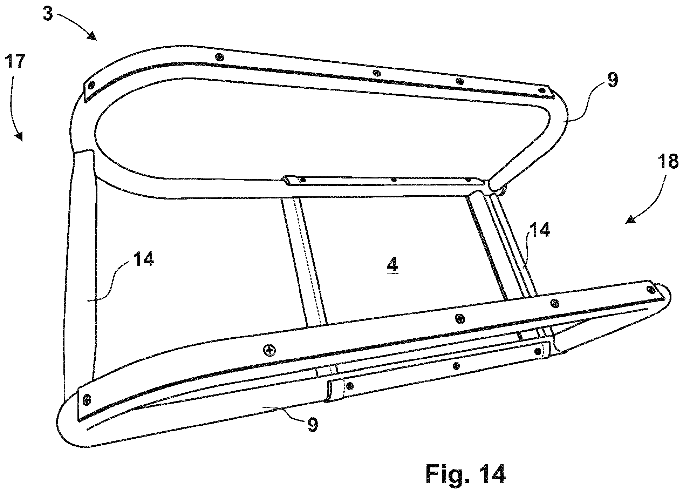

Fig. 13 und Fig. 14 zeigen den Schlitten 3 im Detail. Wie ersichtlich sind die seitlichen Verbindungselemente 9 unterhalb der Sitzfläche 4 nur durch ein Verbindungsrohr 14 etwa an einem vorderen Ende 17 des Schlittens 3 und ein weiteres Verbindungsrohr 14 etwa an einem hinteren Ende 18 des Schlittens 3 verbunden. Weitere Verstrebungen oder Verbindungsmittel 13 sind unterhalb der Sitzfläche 4 nicht vorgesehen, sodass zwischen den seitlichen Verbindungselementen 9 und unterhalb der Sitzfläche 4 ein großer Raum verbleibt, in welchem der Rucksack 2 angeordnet werden kann. Dadurch wird einerseits ein leichtgewichtiger Schlitten 3 erreicht, welcher andererseits auch einfach um das am hinteren Ende 18 des Schlittens 3 angeordnete Verbindungsrohr 14 geschwenkt werden kann, um den Schlitten 3 von der Trageposition in die Fahrposition zu bringen.

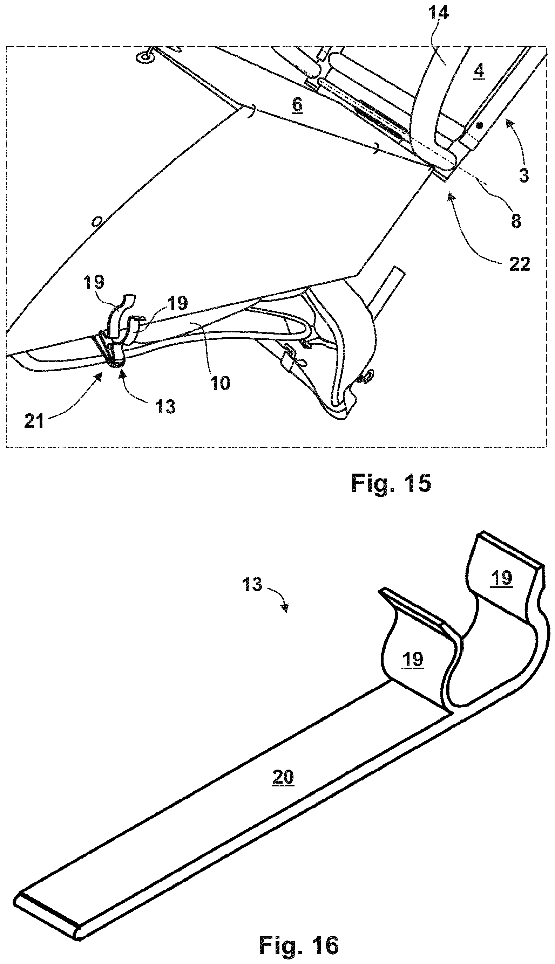

Fig. 15 zeigt das Set 1 in einer Position, in welcher der Schlitten 3 bereit in der ersten Position 21 vom Rucksack 2 gelöst und an der Aufnahme 12 noch mit dem Rucksack 2 verbunden ist. Hier ist insbesondere ein Verbindungsmittel 13 ersichtlich, mit welchem der Rucksack 2 an der ersten Position 21 lösbar mit dem Schlitten 3 verbunden werden kann. Das hier dargestellte Verbindungsmittel 13 weist zwei Schenkel 19 auf, zwischen welchen eines der umlaufenden Aluminiumrohre des Schlittens 3, welche die seitlichen Verbindungselemente 9 bilden, form- und/oder kraftschlüssig fixiert werden kann. Es versteht sich, dass das Verbindungsmittel 13 auch auf jede andere geeignete Weise ausgebildet sein kann, um eine einfach lösbare Verbindung zwischen Rucksack 2 und Schlitten 3 zu ermöglichen.

Fig. 16 zeigt ein alternatives Verbindungsmittel 13, mit welchem der Schlitten 3 an der ersten Position 21 lösbar mit dem Rucksack 2 verbindbar ist. Dieses Verbindungsmittel 13 weist zwei leicht verformbare Schenkel 19 auf, zwischen welchen ein Rohr des Schlittens 3, insbesondere eines der umlaufenden Aluminiumrohre form- und/oder kraftschlüssig fixiert werden kann. Bevorzugt ist das Verbindungsmittel 13 aus Kunststoff ausgebildet, wenngleich auch andere Materialien möglich sind. Dieses Verbindungsmittel 13 kann auch mit dem Rucksack 2 lösbar verbunden sein, beispielsweise durch Einschieben in den Rucksack 2, sodass das Verbindungsmittel 13 für eine Nutzung des Rucksacks 2 im Sommer ohne Schlitten 3 leicht vom Rucksack 2 gelöst werden kann. Das dargestellte Verbindungsmittel 13 weist hierzu einen Befestigungssteg 20 auf, der in den Rucksack 2 geschoben und dort befestigt werden kann.

Mit einem erfindungsgemäßen Set 1 ist ein besonders einfacher Wechsel einer Position des Schlittens 3 von der Transportposition am Rücken einer Person in eine Fahrposition möglich, wobei der Benutzer dabei den Rucksack 2 nicht vom Rücken lösen muss. Dadurch ist ein Wechsel beispielsweise bei Schneeschuhwanderungen auch für nur sehr kurze Teilstücke durchführbar, ohne hierfür viel Zeit für eine Umpositionierung zu benötigen.

## Patentansprüche

1. Set (1), umfassend einen Rucksack (2), insbesondere einen Rucksack (2) nach einem der Ansprüche 12 bis 16, und einen Schlitten (3), insbesondere einen Schlitten (3) nach einem der Ansprüche 9 bis 11, **dadurch gekennzeichnet, dass** der Schlitten (3) bewegbar, insbesondere lösbar, mit dem Rucksack (2) verbindbar ist, wobei der Schlitten (3) am Rucksack (2) in einer Transportposition anbringbar ist, in welcher der Schlitten (3) mit dem Rucksack (2) an einem Rücken einer Person transportierbar ist, wobei der Schlitten (3) von der Transportposition mittels einer Bewegung relativ zum Rucksack (2) in eine Fahrposition bringbar ist, in welcher eine den Rucksack (2) tragende Person auf einer Sitzfläche (4) des Schlittens (3) sitzen oder liegen kann.

2. Set (1) nach Anspruch 1, **dadurch gekennzeichnet, dass** der Schlitten (3) zwei Kufen (5) aufweist und der Rucksack (2) in der Transportposition zwischen den Kufen (5) angeordnet ist, wobei eine Sitzfläche (4) des Schlittens (3) über einer Vorderseite (6) des Rucksacks (2) positioniert ist.

3. Set (1) nach Anspruch 1 oder 2, **dadurch gekennzeichnet, dass** der Rucksack (2) mit dem Schlitten (3) an zumindest einer ersten Position (21) lösbar verbindbar ist.

4. Set (1) nach Anspruch 3, **dadurch gekennzeichnet, dass** der Rucksack (2) mit dem Schlitten (3) an zumindest einer zweiten Position (22) schwenkbar und/oder lösbar verbindbar ist.

5. Set (1) nach einem der Ansprüche 1 bis 4, **dadurch gekennzeichnet, dass** der Schlitten (3) mit dem Rucksack (2) um eine Schwenkachse (8) schwenkbar verbunden ist.

6. Set (1) nach einem der Ansprüche 1 bis 5, **dadurch gekennzeichnet, dass** der Schlitten (3) mit dem Rucksack (2) über eine Sicherungsleine verbunden ist.

7. Set (1) nach einem der Ansprüche 1 bis 6, **dadurch gekennzeichnet, dass** der Schlitten (3) von der Transportposition in die Fahrposition bringbar ist, indem der Schlitten (3) vom Rucksack (2) an einer ersten Position (21) gelöst wird, wonach der Schlitten (3) um eine Schwenkachse (8), welche vorzugsweise parallel zu einer Transversalachse einer gedachten Person, welchen den Rucksack (2) trägt, ist, unter dem Rucksack (2) hindurchgeschwenkt wird, wobei der Schlitten (3) während des Schwenkens noch an einer zweiten Position (22) mit dem Rucksack (2) verbunden ist, wonach der Schlitten (3) vom Rucksack (2) gänzlich gelöst wird.

8. Set (1) nach einem der Ansprüche 1 bis 7, **dadurch gekennzeichnet, dass** zwei Schneeschuhe vorgesehen sind, wobei der Schlitten (3) zur lösbaren Befestigung der Schneeschuhe, insbesondere an seitlichen Verbindungselementen (9) des Schlittens (3), ausgebildet ist.

9. Schlitten (3) für ein Set (1) nach einem der Ansprüche 1 oder 8, aufweisend eine Sitzfläche (4) sowie zwei mit der Sitzfläche (4) über seitliche Verbindungselemente (9) verbundene Kufen (5), **dadurch gekennzeichnet, dass** unter der Sitzfläche (4) zwischen den Verbindungselementen (9) ein Rucksack (2) anbringbar ist.

10. Schlitten (3) nach Anspruch 9, **dadurch gekennzeichnet, dass** die seitlichen Verbindungselemente (9) durch umlaufende Rohre, insbesondere Aluminiumrohre, gebildet sind.

11. Schlitten (3) nach Anspruch 9 oder 10, **dadurch gekennzeichnet, dass** zwischen den seitlichen Verbindungselementen (9) unterhalb der Sitzfläche (4) keine weiteren Elemente angeordnet sind.

12. Rucksack (2) für ein Set (1) nach einem der Ansprüche 1 bis 8, wobei der Rucksack (2) einen Boden (15), zwei Seitenflächen, eine Vorderseite (6) und eine Rückseite (7) aufweist, wobei an der Rückseite (7) Trageriemen (10) angeordnet sind, über welche der Rucksack (2) an einem Rücken einer Person anbringbar ist, **dadurch gekennzeichnet, dass** der Rucksack (2) zwischen seitlichen Verbindungselementen (9) eines Schlittens (3) positionierbar ist.

13. Rucksack (2) nach Anspruch 12, **dadurch gekennzeichnet, dass** der Rucksack (2) einen bewegbar mit dem Boden (15) verbundenen Adapter aufweist, wobei mit dem Adapter ein Schlitten (3) schwenkbar und bevorzugt lösbar verbindbar ist.

14. Rucksack (2) nach Anspruch 13, **dadurch gekennzeichnet, dass** der Adapter um eine Klappachse (16) schwenkbar mit dem Boden (15) verbunden ist und der Schlitten (3) um eine zur Klappachse (16) etwa parallele Schwenkachse (8) schwenkbar mit dem Adapter verbunden ist.

15. Rucksack (2) nach Anspruch 12 oder 14, **dadurch gekennzeichnet, dass** der Rucksack (2) kopfseitig ein oder mehrere Verbindungsmittel (13) aufweist, über welche der Rucksack (2) lösbar mit dem Schlitten (3) verbindbar ist, wobei bevorzugt das zumindest eine Verbindungsmittel (13) lösbar mit dem Rucksack (2) verbunden ist, insbesondere über einen Befestigungssteg (20).
